Europäisches Patentamt

European Patent Office

Office européen des brevets

(19)

(11) Veröffentlichungsnummer: **0 194 585**
A2

(12) # EUROPÄISCHE PATENTANMELDUNG

(21) Anmeldenummer: 86102944.5

(22) Anmeldetag: 06.03.86

(51) Int. Cl.⁴: **B 29 C 67/22**
**B 29 C 45/28**
**//B29K105:04**

(30) Priorität: 06.03.85 DE 3507954

(43) Veröffentlichungstag der Anmeldung:
17.09.86 Patentblatt 86/38

(84) Benannte Vertragsstaaten:
DE FR GB IT

(71) Anmelder: kvl Kunststoffverarbeitung GmbH
Luisenstrasse 51
D-6780 Pirmasens(DE)

(72) Erfinder: Schweikert, Siegfried
Darmstädter Strasse 24
D-6780 Pirmasens(DE)

(74) Vertreter: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel Möhlstrasse 22
D-8000 München 80(DE)

(54) Anordnung eines Rückschlagventils im Angusskanal einer Schäumform.

(57) Im Angußkanal einer Schäumform ist ein Rückschlagventil angeordnet. Dieses umfaßt einen Ventilsitz und einen
scheibenförmigen Ventilkörper aus Kunststoff oder gummiartigem Werkstoff. Der scheibenförmige Ventilkörper ist
einstückig mit einem Lagerbalken hergestellt. Der Lagerbalken überquert mit einer vom Ventilkörper abgelegenen
Anlagefläche dicht anliegend eine Angußkanalbegrenzungsfläche des ersten von zwei den Angußkanal definierenden
Formteilen. Über den Querschnitt des Angußkanals überstehende Abschnitte des Lagerbalkens sind zwischen Formschlußflächen der beiden Formteile eingespannt. Der Ventilsitz ist an einer Schulter einer Rinnenförmigen Angußkanalbegrenzungsfläche des zweiten Formteils angebracht.

FIG. 1

EP 0 194 585 A2

PATENTANWÄLTE DIPL.-ING. H. WEICKMANN, DIPL.-PHYS. DR. K. FINCKE
DIPL.-ING. F. A. WEICKMANN, DIPL.-CHEM. B. HUBER
DR.-ING. H. LISKA, DIPL.-PHYS. DR. J. PRECHTEL

0194585

8000 MÜNCHEN 86
— 1 — POSTFACH 860 820
MÜHLSTRASSE 22
TELEFON (089) 98 03 52
TELEX 5 22 621
TELEGRAMM PATENTWEICKMANN MÜNCHEN

CIP

kvl Kunststoffverarbeitung GmbH
Luisenstraße 51

6780 Pirmasens

Anordnung eines Rückschlagventils im Angußkanal einer Schäumform

Die Erfindung betifft eine Anordnung eines Rückschlagventils im Angußkanal einer Schäumform, insbesondere einer Polyuretanschäumform, umfassend einen Ventilsitz und einen scheibenförmigen Ventilkörper aus Kunststoff oder gummiartigem Werkstoff.

Für die Anordnung des Rückschlagventils im Angußkanal sind die verschiedensten Lösungen entwickelt worden, die jedoch alle in einer oder mehrfacher Hinsicht unbefriedigend sind. Bei einer ersten bekannten Ausführungsform sind drei Formteile vorgesehen, von denen zwei ein Formnest bilden und ein dritter in dieses Formnest einführbar ist. Beim Einführen des dritten Formteils in das Formnest wird der Angußkanal geschlossen.

0194585

Bei einer zweiten bekannten Ausführungsform ist eine hochpräzise arbeitender metallischer Schieber in den Angußkanal eingebaut, der nach dem Einschäumen mechanisch oder elektrisch-pneumatisch verschiebbar ist.

Bei einer dritten bekannten Ausführungsform ist eine Schieberbaugruppe vor dem Eingang des Angußkanals, d. h. zwischen dem Schäumaggregat und der Form angebracht; dieser Schieber ist von dem Schäumaggregat her oder durch eine direkte elektrisch-pneumatische Steuerung zu öffnen und zu verschließen.

Bei diesen drei Ausführungsformen bestehen zwangsläufig Zwischenräume zwischen den beweglichen Teilen. Diese Zwischenräume werden, auch wenn sie durch hohe Präzision noch so klein gehalten werden, mit PUR-Schaum (Polyuretanschaum) mehr oder minder schnell ausgefüllt, wobei die dann entstandenen, dem Strömungsquerschnitt zugekehrten Ränder das Fließverhalten und damit letztlich den entstehenden Formling negativ beeinflussen. Dieser Effekt vergrößert sich noch, wenn die bewegten Teile sich infolge der ständigen Bewegung abnutzen. Nach einiger Zeit müssen die beweglichen mechanischen Teile infolge Abnutzung erneuert werden. Dabei entstehen wegen der meist sehr aufwendigen Konstruktion hohe Erneuerungskosten.

Je nach Art der Ansteuerung der Ventile kann eine Verzögerung beim Verschließen des Angußkanals auftreten, was ebenfalls zu einer Verschlechterung des Formlings führen kann.

Besonders lästig ist die immer wieder und bei verschiedenen Verschlußsystemen sogar sehr häufig vorzunehmende Reinigung der Ventilteile von Schaumrückständen, die durch das Eindringen des flüssigen PUR-Schaumes und die bei der Reaktion sich ergebende Hautbildung notwendig wird. Durch diese Häute, die sich an den Ventilteilen verankern und weiter anwachsen wird das Verschlußsystem negativ bis zur völligen Unbrauchbarkeit verändert.

Bei einer vierten Ausführungsform ist ein sogenannter Schnellspanner an der Form vorgesehen, der einen Verschlußbolzen für den Eingang des Angußkanals trägt und nach Art eines Schwenkdeckels in Schließ- bzw. Öffnungsstellung gebracht werden kann, und zwar entweder manuell oder elektropneumatisch. Auch hier ist mit Verschmutzungsgefahr und deshalb mit der Notwendigkeit wiederholter Reinigung zu rechnen. Auch müssen die meist aus Gummi bestehenden Verschlußteile häufig ersetzt werden. Bei längerer Zeit benutzten Verschlüssen ist kein exakter Abschluß mehr gewährleistet, wodurch die Qualität der Formlinge beeinträchtigt wird. Auch das Fließverhalten beim Eintritt der schäumfähigen Masse in das Formnest wird beeinträchtigt, wenn abgenutzte Ventilteile überströmt werden. Besonders nachteilig bei der vierten Ausführungsform ist, daß der Verschluß erst dann erfolgen kann, wenn der Eingang des Angußkanals soweit vom Schäumaggregat getrennt ist, daß die bewegten Verschlußteile ihre Bewegung ausführen können. Hierdurch kann der Schaum während einer mehr oder weniger langen Zeit aus dem Angußkanal austreten, wodurch die Qualität des Formlings negativ beeinfluß wird und gleichzeitig eine ständige Verschmutzung der Verschlußteile eintritt.

Bei einer fünften Ausführungsform werden Verschlußteile einfacher Art im Angußkanal plaziert. Es handelt sich um Teile, die nur einmal oder nur wenige Male benutzt werden. Die Formgebung der Ventilkörper reicht von runden einfachen Plastikscheiben über Pfropfenform bis zu Ventilkugeln.

Bei dieser fünften Ausführungsform ist durch das lose Einlegen die Exaktheit und damit die Dichtheit des Verschlusses gefährdet. Außerdem ist es schwer, einen brauchbaren Kompromiß zwischen konstengünstiger und einfacher Herstellung einerseits und exaktem Verschluß andererseits zu finden. Die Ventilkörper sind nach jedem Schäumvorgang unbrauchbar, weil sie zumindest teilweise von einer Plyuretanhaut umschlossen sind, die sich kaum mehr abziehen läßt.

Der Erfindung liegt die Aufgabe zugrunde, eine Anordnung der eingangs bezeichneten Gattung so zu gestalten, daß ein exakter und genau reproduzierbarer Abschluß des Angußkanals möglich wird, daß der Verschluß unmittelbar nach Beendigung des Einschäumvorgangs eintritt, daß die Herstellung des Rückschlagventils einfach und preisgünstig ist und daß eine Säuberung entfällt und dennoch eine Mehrfachverwendung möglich wird. Weiterhin soll das Rückschlagventil bei verschiedensten, z. B. gefrästen und gegossenen Formen und unabhängig vom jeweiligen Formenaufbau und der Gestalt des Formnests anwendbar sein.

Zur Lösung dieser Aufgabe wird erfindungsgemäß vorgeschlagen, daß der scheibenförmige Ventilkörper einstückig mit einem Lagerbalken hergestellt ist, welcher mit einer vom Ventilkörper abgelegenen Anlagefläche eine Angußkanalbegrenzungsfläche des ersten von zwei den Angußkanal definierenden Formteilen dicht anliegend überquert, daß die über den Querschnitt des Angußkanals überstehenden Abschnitte des Lagerbalkens zwischen Formschlußflächen der beiden Formteile eingespannt sind und daß der Ventilsitz an einer Schulter einer rinnenförmigen Angußkanalbegrenzungsfläche des zweiten Formteils angebracht ist.

Bei der erfindungsgemäßen Ausbildung ist der scheibenförmige Ventilkörper mit dem Lagerbalken leicht herzustellen, z. B. im Spritzgußverfahren. Entsprechend gering sind die Herstellungskosten. Der Einbau des aus Ventilkörper und Lagerbalken bestehenden Elements ist äußerst einfach. Beim Entnehmen des Formlings wird der Ventilkörper häufig mit entnommen. Er mag dann noch leicht zusammenhängen, entweder mit dem entstandenen Formling und/oder mit dem im äußeren Teil des Angußkanals entstandenen Schaumpfropfen. Er ist aber in aller Regel leicht vom Formling bzw. dem äußeren Schaumpfropfen abzunehmen, da er bei entsprechender Wahl des Kunststoffs für die Herstellung des Ventilkörpers und gegebenenfalls Beschichtung mit Antihaftmaterialien nur mit geringer Adhäsionskraft anhaftet. Eine Umschäumung des Ventilkörpers tritt nicht ein, so daß etwaige Schaumreste leicht abgepellt werden können. Nach einem oder mehreren Schäumvorgängen nimmt die Bedienungsperson den Verschlußteil zur Inspektion in die Hand und setzt ihn dann wieder in den Angußkanal ein, bevor die Formteile zusammengehen. Dies geht in Sekundeneile vor sich und reduziert die Leistungsfähigkeit der Maschine nicht wesentlich. Durch die Verwendung von Materialien für den Ventilkörper, die einer Verbindung und Haftung mit PUR-Schaum widerstehen und gleichzeitig genügend Flexibilität und geringen Materialermüdungswert aufweisen, ist eine häufige Wiederverwendung erzielbar. Da das Ventil auf dem Rückschlagprinzip beruht, ist die ehest mögliche Schließung des Angußkanals gewährleistet, so daß kein Rückfluß von Schaum aus dem Formnest zu befürchten ist und Qualität des Formlings sowie Materialverbrauch optimiert sind. Die Lage des Rückschlagventils im Angußkanal wird möglichst nahe zur Ansatzstelle des Schäumaggregats hin verlegt, um das Verlustvolumen entsprechend dem Volumen des Angußkanals zwischen Rückschlagventil und Mundstück des Schäumaggregats minimal zu halten. Auch die Länge des zwischen dem Rückschlagventil und dem Formnest gelegenen Abschnitts des Angußkanals wird man zur Vermeidung von Schaumverlusten möglichst gering halten, wobei allerdings Rücksicht genommen werden muß auf die zur Anpassung an die Formnestgestalt gegebenenfalls notwendige Form des Angußkanalquerschnitts an der Einmündungsstelle in das Formnest. Im Hinblick darauf sind gelegentlich gewisse Mindestlängen des Angußkanalabschnitts zwischen Rückschlagventil und Formnest notwendig, um unter Einhaltung der rheologischen Voraussetzungen den Übergang vom Ventilquerschnitt zum gewünschten Mündungsquerschnitt zu erzielen. (Anspruch 1)

Um eine möglichst gute Dichtung zwischen dem Lagerbalken und der von ihm überquerten Angußkanalbegrenzungsfläche zu erzielen und dies bei gleichzeitig vereinfachter Herstellungsmöglichkeit wird vorgeschlagen, daß die von dem Lagerbalken überquerte Angußkanalbegrenzungsfläche und die dem ersten Formteil zugehörige Formschlußfläche von einer gemeinsamen Planfläche gebildet sind und daß in der Formschlußfläche des zweiten Formteils Ausnehmungen für die Aufnahme der überstehenden Abschnitte des Lagerbalkens ausgebildet sind. Es ist auch möglich, die Ausnehmungen für die Aufnahme der überstehenden Abschnitte so auszubilden, daß sie eine Art Schnappverbindung mit den überstehenden Abschnitten des Lagerbalkens bilden. Dann ist sichergestellt, daß der Ventilkörper beim Entnehmen des Formlings und des zwischen Ventil und Schäumaggregat liegenden Schaumpfropfens an Ort und Stelle bleibt und durch eine gezielte Entnahmeaktion entnommen werden muß. (Anspruch 2)

Der Lagerbalken kann aus herstellungstechnischen Gründen mit halbkreisförmigem Querschnitt ausgeführt sein, wobei die Ausnehmungen in dem zweiten Formteil für die Aufnahme der überstehenden Abschnitte dann entsprechend halbkreisförmigen Querschnitt besitzen. Daneben sind auch andere Querschnittsformen für den Lagerbalken möglich. Wesentlich ist, daß der Lagerbalken steif genug ist, um in seinem Abschnitt innerhalb des Angußkanals mit ausreichendem Dichtdruck an der Angußkanalbegrenzungsfläche des ersten Formteils anliegt. (Anspruch 3)

Im Hinblick auf eine gute Abdichtung ist es vorteilhaft, wenn die Endabschnitte des Lagerbalkens ein Querschnittsübermaß gegenüber dem Querschnitt der Ausnehmungen besitzen, derart, daß bei Formschluß eine elastische Quetschung der Überstände innerhalb der Ausnehmungen eintritt. (Anspruch 4)

Im Hinblick auf eine einfache Herstellung und eine gute Abdichtung ist es weiter vorteilhaft, wenn der Ventilsitz und die Ventilsitzanlagefläche des Ventilkörpers plan und im wesentlichen senkrecht zur Durchflußrichtung des Angußkanals sind. (Anspruch 5)

Im Hinblick auf eine möglichst geringe Drosselung am Ventilort empfiehlt es sich, daß zwischen dem scheibenförmigen Ventilkörper und dem Lagerbalken eine gelenkartig wirkende Schwächungsstelle vorgesehen ist. (Anspruch 6)

Um sicherzustellen, daß im voll geöffneten Zustand des Ventils der Ventilkörper eine ausreichende Angriffsfläche für die im Formnest sich ausdehnende Schaummasse darbietet, wird vorgeschlagen, daß die Auslenkung des scheibenförmigen Ventilkörpers durch einen Ausnehmungsbegrenzungsanschlag begrenzt ist; dies ist eine wesentliche Maßnahme, um eine verzögerungsfreie und reproduzierbare Schließung des Ventils zu gewährleisten. (Anspruch 7)

Dabei kann der Auslenkungsbegrenzungsanschlag innerhalb des Angußkanals an dem ersten Formteil befestigt sein. (Anspruch 8)

Um eine Drosselung des Schaummassezuflusses durch den Angußkanal am Orte des Ventils möglichst zu vermeiden wird vorgeschlagen, daß der Querschnitt des Angußkanals stromabwärts des Ventilsitzes derart erweitert ist, daß keine wesentliche Verengung des Strömungsquerschnitts des Angußkanals durch den scheibenförmigen Ventilkörper eintritt, wenn sich dieser in Öffnungsstellung befindet. (Anspruch 9) Dabei wird die Kanalerweiterung bevorzugt durch eine Senke im Boden der dem zweiten Formteil angehörenden rinnenförmigen Angußkanalbegrenzungsfläche gebildet. (Anspruch 10)

Im Hinblick auf eine exakte Positionierung des Lagerbalkens wird vorgeschlagen, daß der Lagerbalken mit Positionierungsvorsprüngen zum Eingriff in Aufnahmelöcher mindestens einer der Formschlußflächen versehen ist. (Anspruch 11) Beispielsweise kann der Lagerbalken an beiden überstehenden Abschnitten je einen vorzugsweise leicht konischen Zapfen zum Eingriff in entsprechende Aufnahmelöcher in der Formschlußfläche des zweiten Formteils aufweisen. (Anspruch 12) Durch Einpressen der konischen Zapfen in die Aufnahmelöcher kann ein Sitz gewährleistet werden, der einen Halt des Lagerbalkens so lange sicherstellt, bis der Ventilkörper mit dem Lagerbalken absichtlich entnommen wird.

Der Lagerbalken kann auch an beiden überstehenden Abschnitten je einen vorzugsweise quadratischen Zapfen zum Eingriff in entsprechende Aufnahmelöcher in der Formschlußfläche des ersten Formteils aufweisen. Dadurch wird eine zusätzliche Zentrierung an der Formschlußfläche des ersten Formteils erreicht. Außerdem können diese quadratischen Zapfen Auswerferansatzpunkte bei der Fertigung auf einer automatischen Spritzgußmaschine sein. (Anspruch 13)

Die Abmessungen des Verschlußkörpers samt Lagerbalken sind in der Regel so gering, daß es sich empfiehlt, an dem Lagerbalken ein die Handhabung erleichterndes Griffelement anzubringen und in einer der Formschlußflächen eine Aufnahmekammer für dieses Griffelement. (Anspruch 14)

Eine fertigungstechnisch und rheologisch vorteilhafte Ausführungsform ergibt sich dann, wenn die rinnenförmige Angußkanalbegrenzungsfläche des zweiten Formteils im Querschnitt etwa halbkreisförmig ist und der scheibenförmige Ventilkörper dementsprechend annähernd halbkreisförmigen Umriß besitzt.

Die beiliegenden Figuren erläutern die Erfindung anhand eines Ausführungsbeispiels. Es stellen dar:

Fig. 1   einen Längsschnitt durch den Angußkanal einer
         Schäumform und

Fig. 2   eine perspektivische Ansicht des Ventilkörpers
         für den Angußkanal gemäß Fig. 1.


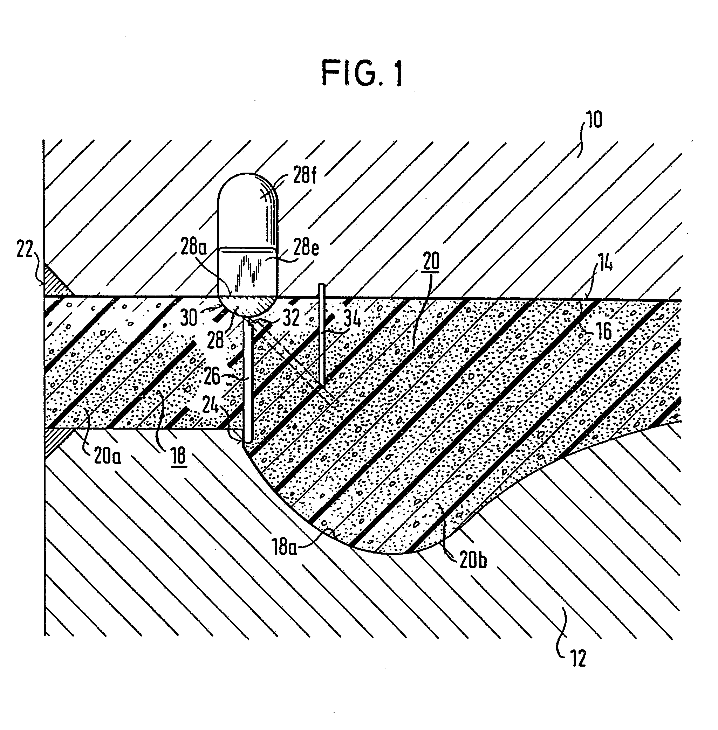

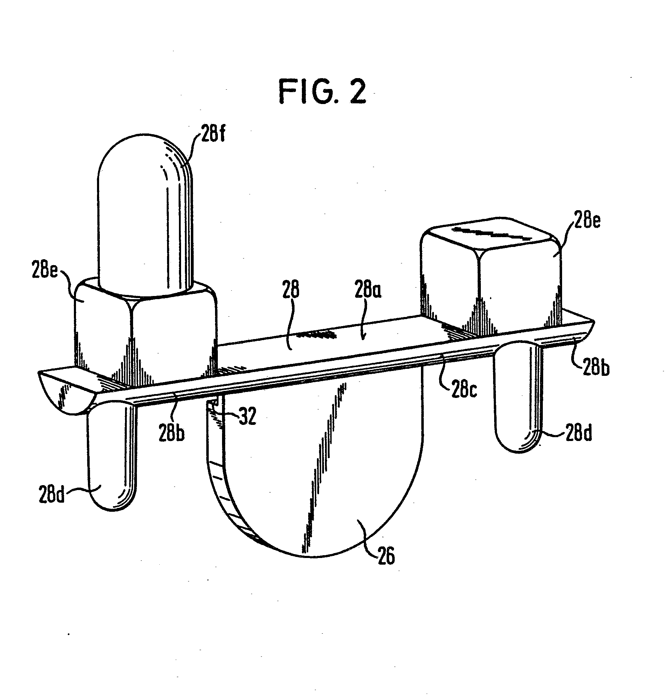

In Fig. 1 erkennt man die angußkanalseitigen Bereiche von
zwei Formteilen, einem ersten Formteil 10 und einem zweiten
Formteil 12. Diese Formteile 10, 12 liegen bei geschlossener Form mit Formschlußflächen 14 und 16 aneinander an.
In der Formschlußfläche 16 ist eine Rinne 18 gebildet,
die zusammen mit der Formschlußfläche  14 den Angußkanal
20 begrenzt. Der Angußkanal 20 setzt sich zusammen aus
einem Abschnitt 20a und einem Abschnitt 20b. Der Abschnitt
20a erstreckt sich von einer Ankupplungsfläche 22,in der
der Mundstück eines Schäumaggregats angeschlossen wird,
bis zu einer Schulter 24, welche im wesentlichen senkrecht
zur Längsrichtung des Angußkanals 20 ist. Der Abschnitt
20b des Angußkanals erstreckt sich von der Schulter 24 bis
zur Einmündung des Angußkanals in ein nicht eingezeichnetes Formnest, welches zwischen den Formteilen 10 und 12
gebildet ist und in welchem der Formling gebildet werden
soll, beispielsweise eine Schuhsohle. Am Orte der Schulter
24 ist ein Rückschlagventil gebildet. Dieses Rückschlagventil umfaßt einen Ventilkörper 26, der mit einem Lagerbalken 28 einstückig hergestellt ist (siehe Fig. 2). Der
Lagerbalken besitzt halbkreisförmigen Querschnitt und
liegt mit seiner Anlagefläche 28a an der Formschlußfläche
14 des ersten Formteils 10 (d. i. die Angußkanalbegrenzungsfläche des ersten Formteils 10) an. Der Lagerbalken 28
weist zwei überstehende Abschnitte 28b auf, die über die
Breite der Rinne 18 überstehen und von halbzylindrischen
Ausnehmungen 30 in der Formschlußfläche 16 des zweiten
Formteils 12 aufgenommen sind. Der Ventilkörper 26 ist an seiner in der Fig. 1 linken Seite plan und liegt an der ebenfalls planen Schulterfläche 24 an, die einen Ventilsitz bildet. Die Abschnitte 28b sind gegenüber den Ausnehmungen 30 leicht überdimensioniert, so daß sie beim Formschluß zwischen den Ausnehmungen 30 und der Formschlußfläche 14 des ersten Formteils 10 elastisch gequetscht werden. Von der halbzylindrischen Mantelfläche 28c des Lagerbalkens 28 gehen leicht konische Zapfen 28d aus, welche von nicht gezeigten Löchern in der Formschlußfläche 16 des zweiten Formteils 12 aufgenommen werden. Von der Anlagefläche des Lagerbalkens 28 gehen quaderförmige Zapfen 28e aus, welche von ebenfalls nicht eingezeichneten Aufnahmelöchern in der Formschlußfläche 14 des ersten Formteils 10 aufgenommen werden. An dem einen der kubischen Zapfen 28e befindet sich ein Griffelement 28f, an welchem die Finger anfassen können, wenn der Lagerbalken 28 in das zweite Formteil 12 eingesetzt wird. Zwischen dem Ventilkörper 26 und dem Lagerbalken 28 ist eine Schwächungsnut 32 vorgesehen, so daß der Ventilkörper 26 aus der ausgezogen gezeichneten Schließstellung gemäß Fig. 1 in die gestrichelt gezeichnete Öffnungsstellung verschwenkt werden kann und zwar gegen geringen elastischen Widerstand. Die Öffnungsstellung des Ventilkörpers 24 ist durch einen Anschlagstift 34 definiert, der innerhalb des Angußkanals 20 in der Formschlußfläche 14 verankert ist.

Im Betrieb wird nach Schließen der Form durch Zusammenfahren der beiden Formteile 10 und 12 ein Schäumaggregat (nicht eingezeichnet) bei 22 angesetzt. Dann beginnt unter leichtem Druck die Einführung des schäumfähigen Reaktionsgemisches durch den Angußkanal 20 in das Formnest. Dabei öffnet sich zwangsläufig der Ventilkörper 26, so daß das Reaktionsgemisch an dem Ventilkörper vorbei in das Formnest fließen kann. Um dem Reaktionsgemisch am Orte des Ventils einen möglichst geringen Widerstand entgegenzusetzen, ist im Boden der rinnenförmigen Kanalbegrenzungsfläche 18 anschließend an die Schulterfläche 24 (Ventilsitz) eine Kanalerweiterung 18a vorgesehen. Der Querschnitt der Rinne 18 ist im Bereich des Abschnitts 20a halbkreisförmig, während im Bereich des Abschnitts 20b die Rinne sich aus einem Rechtecksquerschnitt und einem Halbkreisquerschnitt zusammensetzt.

Soblad der Einschäumvorgang beendet ist, bewirkt der Druck, der in dem Formnest durch die Aufschäumreaktion entsteht, ein Schließen des scheibenförmigen Ventilkörpers 26. Wenn der Aufschäum- und Aushärtvorgang beendet sind, werden die Formteile 10 und 12 voneinander abgehoben und der entstandene Formling wird entnommen. Wenn der Balken 28 lose in den Formteil 12 eingelegt ist, so wird sich der Ventilkörper 26 häufig mit dem entstandenen Formling entnehmen lassen, wobei der Ventilkörper 26 an dem rechts und links von ihm entstandenen Angußkanalpfropfen anhaften mag oder an einem von beiden. Dank entsprechender Materialwahl des Ventilkörpers 26 oder entsprechender Oberflächenbeschichtung läßt sich jedoch der jeweilige Schaumpfropfen leicht von dem Ventilkörper 26 lösen. In der Regel bleibt keine Haut des Schaums an dem Ventilkörper haften, jedenfalls aber keine allseitig umschließende Haut, so daß etwaige Hautreste leicht abgepellt werden können. Vor dem nächsten Einschäumvorgang wird der Ventilkörper wieder in den zweiten Formteil eingesetzt, worauf sich der Vorgang wiederholt. Man kann den Ventilkörper 26 nach jedem Einschäumvorgang oder gegebenenfalls auch jeweils nach mehreren kontrollieren und gegebenenfalls reinigen oder ersetzen.

P a t e n t a n s p r ü c h e

1. Anordnung eines Rückschlagventils im Angußkanal (20) einer Schäumform, insbesondere einer Polyuretanschäumform, umfassend einen Ventilsitz (24) und einen scheibenförmigen Ventilkörper (26) aus Kunststoff oder gummiartigem Werkstoff, dadurch gekennzeichnet, daß der scheibenförmige Ventilkörper (26) einstückig mit einem Lagerbalken (28) hergestellt ist, welcher mit einer vom Ventilkörper (26) abgelegenen Anlagefläche (28a) eine Angußkanalbegrenzungsfläche (14) des ersten (10) von zwei den Angußkanal (20) definierenden Formteilen (10, 12) dicht anliegend überquert, daß die über den Querschnitt des Angußkanals (20) überstehenden Abschnitte (28b) des Lagerbalkens (28) zwischen Formschlußflächen (14, 16) der beiden Formteile (10, 12) eingespannt sind und daß der Ventilsitz (24) an einer Schulter einer rinnenförmigen Angußkanalbegrenzungsfläche (18) des zweiten Formteils (12) angebracht ist.

2. Anordnung nach Anspruch 1, dadurch gekennzeichnet, daß die von dem Lagerbalken (28) überquerte Angußkanalbegrenzungsfläche (14) und die dem ersten Formteil (10) zugehörige Formschlußfläche (14) von einer gemeinsamen Planfläche (14) gebildet sind und daß in der Formschlußfläche (16) des zweiten Formteils (12) Ausnehmungen (30) für die Aufnahme der überstehenden Abschnitte (28b) des Lagerbalkens (28) ausgebildet sind.

3. Anordnung nach einem der Ansprüche 1 und 2, dadurch gekennzeichnet, daß der Lagerbalken (28) halbkreisförmigen Querschnitt besitzt und die Ausnehmungen (30) in dem zweiten Formteil (12) für die Aufnahme der überstehenden Abschnitte (28b) des Lagerbalkens (28) entsprechenden halbkreisförmigen Querschnitt besitzen.

4. Anordnung nach einem der Ansprüche 2 und 3, dadurch gekennzeichnet, daß die Endabschnitte (28b) des Lagerbalkens (28) ein Querschnittsübermaß gegenüber dem Querschnitt der Ausnehmungen (30) besitzen, derart, daß bei Formschluß eine elastische Quetschung der Überstände (28b) innerhalb der Ausnehmungen (30) eintritt.

5. Anordnung nach einem der Ansprüche 1 bis 4, dadurch gekennzeichnet, daß der Ventilsitz (24) und die Ventilsitzanlagefläche des Ventilkörpers (26) plan und im wesentlichen senkrecht zur Durchflußrichtung des Angußkanals (20) sind.

6. Anordnung nach einem der Ansprüche 1 bis 5, dadurch gekennzeichnet, daß zwischen dem scheibenförmigen Ventilkörper (26) und dem Lagerbalken (28) eine ge- lenkartig wirkende Schwächungsstelle (32) vorge- sehen ist.

7. Anordnung nach einem der Ansprüche 1 bis 6, dadurch gekennzeichnet, daß die Auslenkung des scheibenförmigen Ventilkörpers (26) durch einen Ausnehmungsbegrenzungsanschlag (34) begrenzt ist.

8. Anordnung nach Anspruch 7, dadurch gekennzeichnet,

daß der Auslenkungsbegrenzungsanschlag (34) innerhalb des Angußkanals (20) an dem ersten Formteil
(10) befestigt ist.

9. Anordnung nach einem der Ansprüche 1 bis 8, dadurch
gekennzeichnet, daß der Querschnitt des Angußkanals
(20) stromabwärts des Ventilsitzes (24) derart erweitert ist (bei 18a), daß keine wesentliche Verengung des Strömungsquerschnitts des Angußkanals
(20) durch den scheibenförmigen Ventilkörper (26)
eintritt, wenn sich dieser in Öffnungsstellung befindet.

10. Anordnung nach Anspruch 9, dadurch gekennzeichnet,
daß die Kanalerweiterung (18a) durch eine Senke im
Boden der dem zweiten Formteil (12) angehörenden
rinnenförmigen Angußkanalbegrenzungsfläche (18) gebildet ist.

11. Anordnung nach einem der Ansprüche 1 bis 10, dadurch
gekennzeichnet, daß der Lagerbalken (28) mit Positionierungsvorsprüngen (28d, 28e) zum Eingriff in
Aufnahmelöcher mindestens einer der Formschlußflächen (14, 16) versehen ist.

12. Anordnung nach Anspruch 11, dadurch gekennzeichnet,
daß der Lagerbalken (28) an beiden überstehenden Abschnitten (28b) je einen vorzugsweise leicht konischen Zapfen (28d) zum Eingriff in entsprechende
Aufnahmelöcher in der Formschlußfläche (16) des
zweiten Formteils (12) aufweist.

13. Anordnung nach einem der Ansprüche 11 und 12, dadurch
gekennzeichnet, daß der Lagerbalken (28) an beiden überstehenden Abschnitten (28b) je einen vorzugsweise quadratischen Zapfen (28e) zum Eingriff in entsprechende Aufnahmelöcher in der Formschlußfläche (14) des ersten Formteils (10) aufweist.

14. Anordnung nach einem der Ansprüche 11 bis 13, dadurch gekennzeichnet, daß an dem Lagerbalken (28) ein die Handhabung erleichterndes Griffelement (28f) angebracht ist und in einer der Formschlußflächen (14, 16) eine Aufnahmekammer für dieses Griffelement (28f).

15. Anordnung nach einem der Ansprüche 1 bis 14, dadurch gekennzeichnet, daß die rinnenförmige Angußkanalbegrenzungsfläche des zweiten Formteils (12) im Querschnitt etwa halbkreisförmig ist und daß der scheibenförmige Ventilkörper (26) dementsprechend annähernd halbkreisförmigen Umriß besitzt.

# FIG. 1

FIG. 2